# EUROPEAN PATENT APPLICATION

(11) **EP 1 903 569 A2**
(43) Date of publication of application: **26.03.2008**
(21) Application number: 07106665.8
(22) Date of filing: 20.04.2007
(51) Int. Cl.: G11B 20/14, G11B 5/09

(54) **Clock extraction method for patterned medium, clock extraction circuit for patterned medium and patterned medium**

(30) Priority: 22.09.2006 JP 2006257852
(71) Applicant: Fujitsu Ltd., Kawasaki-shi, Kanagawa 211-8588 (JP)
(72) Inventor: Izumi, Haruhiko c/o Fujitsu Limited, Kawasaki-shi, Kanagawa 211-8588 (JP)
(74) Representative: Fenlon, Christine Lesley

(57) **Abstract**

Aimed at is to match a timing of a clock signal with a magnetic dot of a patterned medium. A magnetic part (16) arraying magnetic dots (15) for recording a magnetic signal at certain intervals and a nonmagnetic part (17) not recording a magnetic signal are featured in the patterned medium. A position of the nonmagnetic part(17) not recording a magnetic signal is detected by a magnetic head and a clock signal is synchronized with a detection signal of the nonmagnetic part.

## Description

### Background of the Invention

### Field of the Invention

The present invention relates to a clock extraction method using a patterned medium, a clock extraction circuit therefor, a magnetic disk apparatus and a patterned medium.

### Description of the Related Art

A patterned medium having a magnetic dot pattern corresponding to a data bit possesses a characteristic of increasing a recording density than a hard disk which is structured by a magnetic continuous film.

A patterned medium needs to form magnetic dots at certain intervals, also requiring the surface of the magnetic dots to be flat so that the magnetic dots are flush with the surface of a substrate of the medium. This has conventionally necessitated a grinding process called a chemical mechanical grinding at the end of a production process of the media, thereby making the surface thereof flat.

A patent document 1 notes a method for omitting the chemical mechanical grinding process in a production process of a patterned medium, summarizing the process as follows:
(a) Make a matrix thin film having a role of a matrix surrounding magnetic bits intervene between a glass substrate and a resist film. A thickness of the matrix thin film is adjusted to a requirement of a magnetic bit;
(b) Apply an electron ray exposure along with a bit pattern, followed by applying a development process for forming a patterned mask;
(c) Transfer the bit array pattern to the matrix thin film by applying a reactive ion etching. Apply the etching until the surface of the substrate is exposed;
(d) Form a magnetic thin film by a vacuum deposition, et cetera. The thickness is desirably adjusted exactly to a depth of a trench array carved in the matrix thin film;
(e) Remove the patterned mask by melting it by using an organic solvent, resulting in forming a magnetic bit array having a flat surface; and
(f) Cover the surface with a surface lubrication layer for protecting it.

At a magnetic disk apparatus, a data reading and writing is carried out synchronously with a clock signal. In a patterned medium, a position of a magnetic dot for recording data is fixed and therefore a clock signal needs to be matched with the position of the magnetic dot.

Conventionally, however, a method for matching a clock signal with the position of the magnetic dot has not been accomplished for a magnetic disk apparatus using a patterned medium.

[Patent document 1] Laid-Open Japanese Patent Application Publication No. 2001-110050

### Summary of the Invention

The object of the present invention is to match a timing of a clock signal accurately with a position of a magnetic dot of a patterned medium.

The present invention is a clock extraction method for extracting a clock signal determining a timing of writing or reading data to or from a patterned medium, comprising: detecting, by using a magnetism detection unit, a magnetic signal recorded in a patterned medium comprising a magnetic part arraying magnetic dots at certain intervals for recording a magnetic signal, and a nonmagnetic part not recording a magnetic signal; and identifying a section in which an absolute value of an amplitude of the magnetic signal detected by the magnetism detection unit continuously indicates smaller than a certain value as the nonmagnetic part, and synchronizing the clock signal with a timing of a start or end of the identified nonmagnetic part or a detection timing of the magnetic signal of the magnetic dot of the magnetic part subsequent to the nonmagnetic part.

This invention enables a detection of a nonmagnetic part of a patterned medium and a synchronization of a clock signal with a timing of the start or end of the identified nonmagnetic part or a detection timing of the magnetic signal of the magnetic part following the nonmagnetic part. This makes it possible to match a timing of a clock signal with the magnetic dot of the magnetic part.

The clock extraction method detects a timing at which an amplitude of the magnetic signal detected from the magnetic dot of the magnetic part subsequent to the nonmagnetic part becomes a peak value, and synchronizes the clock signal with the timing at which the amplitude becomes the peak value.

This configuration makes it possible to synchronize a clock signal with a timing of a peak amplitude value of a magnetic signal of a magnetic dot of the magnetic part following the nonmagnetic part being detected, thereby enabling a synchronization of the clock signal with the magnetic dot of the magnetic part.

The clock extraction method detects a timing at which a slope of the magnetic signal detected from the magnetic dot of the magnetic part subsequent to the nonmagnetic part becomes zero, and synchronizes the clock signal with the timing at which the slope of the magnetic signal becomes zero.

This configuration makes it possible to synchronize a clock signal with a timing of a magnetic signal pointing at a peak, thereby enabling matching a timing of a clock signal with a magnetic dot.

The clock extraction method differentiates, by using a differential circuit, the magnetic signal detected from the magnetic dot of the magnetic part subsequent to the nonmagnetic part, detects by using a zero-cross circuit a timing at which a value of a differential signal of an output of the differential circuit becomes zero, and synchronizes the clock signal with the timing at which the value of the differential signal becomes zero.

This configuration enables the differential circuit to differentiate a magnetic signal and detect a timing at which a slope of the magnetic signal becomes zero by detecting the timing at which a differential signal indicating zero. And a synchronization of a clock signal with a timing at which the slope becomes zero makes it possible to synchronize a rise or fall timing of the clock signal with a position of the magnetic dot.

Another clock extraction method according to the present invention is one for extracting a clock signal determining a timing of writing or reading data to or from a patterned medium, comprising: detecting, by using a magnetism detection unit, a magnetic part arraying magnetic dots at certain intervals for recording a magnetic signal, a zone not recording a magnetic signal and the magnetic signal recorded in a patterned medium featured with a nonmagnetic part having at least one reference dot recording the magnetic signal; and detecting, by using the magnetism detection unit, the magnetic signal of the reference dot of the nonmagnetic part, and synchronizing the clock signal with a timing of the magnetic signal of the reference dot being detected.

This configuration makes it possible to synchronize a clock signal with a timing of a magnetic signal of a reference dot of a nonmagnetic part being detected. In this event, a setup of a distance from the reference dot to a magnetic dot of a magnetic part at integer times of a center distance between adjacent dots, for example, makes it possible, to match a timing of a clock signal with the magnetic dot of a magnetic part.

A patterned medium according to the present invention is featured with a magnetic part arraying magnetic dots at certain intervals for recording a magnetic signal, and a nonmagnetic part not recording the magnetic signal, both in a track.

This configuration enables a detection of the nonmagnetic part of the patterned medium and a synchronization of the clock signal with the timing of the nonmagnetic part being detected, thereby making it possible to match a timing of the clock signal precisely with the magnetic dot of the magnetic part.

The patterned medium is configured such that the nonmagnetic part is featured with at least one reference dot for recording the magnetic signal in order to synchronize the clock signal.

This configuration makes it possible to detect the reference dot of the nonmagnetic part and synchronize the clock signal with a timing of the reference dot being detected. In this event, a setup of a distance from the reference dot to the magnetic dot of the magnetic part at integer times of a center distance between adjacent dots, for example, makes it possible to match a timing of the clock signal with the magnetic dot of the magnetic part.

### Brief Description of the Drawings

Fig. 1 is a diagram showing a structure of a patterned medium according to a first embodiment;
Fig. 2 is a block diagram of a clock extraction circuit according to the first embodiment;
Fig. 3 is a circuit diagram of a zero level detection circuit;
Fig. 4 is a circuit diagram of a filter;
Fig. 5 is a circuit diagram of a PLL circuit;
Fig. 6 is a diagram describing a clock extraction method according to the first embodiment;
Fig. 7 is a block diagram of a clock extraction circuit according to a second embodiment;
Fig. 8 is a circuit diagram of a differential circuit;
Fig. 9 is a circuit diagram of a zero-cross detection circuit;
Fig. 10 is a diagram describing a clock extraction method according to the second embodiment;
Fig. 11 is a diagram showing a structure of a patterned medium according to a third embodiment; and
Fig. 12 is a diagram describing a clock extraction method according to the third embodiment.

### Description of the Preferred Embodiments

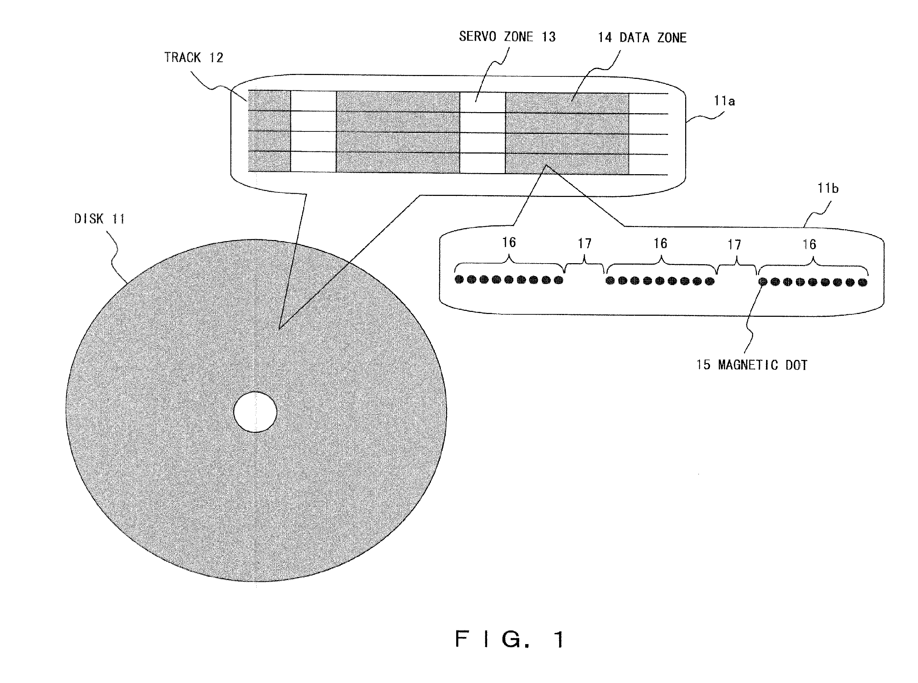

The following is a description of the preferred embodiments of the present invention by referring to the accompanying drawings. Fig. 1 is a diagram showing a structure of a patterned medium 11 according to a first embodiment.

Fig. 1 shows the patterned medium 11 and its partial enlargement diagrams 11a and 11b. The patterned medium 11 is featured with a plurality of tracks 12 in a concentric circular pattern with each track 12 being arrayed, at constant intervals, with servo zones 13 recording data used for controlling positions of writing and reading the patterned medium 11, and data zones 14.

Magnetic parts 16 arraying magnetic dots 15 at certain intervals for recording a magnetic signal and nonmagnetic parts 17 in which a magnetic dot 15 does not exist (i.e., a magnetic signal is not recorded therein) are featured in the data zone 14. A production method for the patterned medium 11 can use a conventional production method.

Featured in the patterned medium. 11 are the magnetic parts 16 arraying magnetic dots 15 at certain intervals and the nonmagnetic parts 17, in which a magnetic dot 15 does not exist, alternately in the track direction. The reason for featuring the nonmagnetic part 17 is to detect a magnetic signal recorded in the patterned medium 11 by a magnetic sensor, thereby detecting a position of a nonmagnetic part 17 in which a magnetic signal is not recorded, and synchronize a clock signal with a timing of the nonmagnetic part 17 being detected, thereby matching a timing of the clock signal with a position of a magnetic dot in the magnetic part 16.

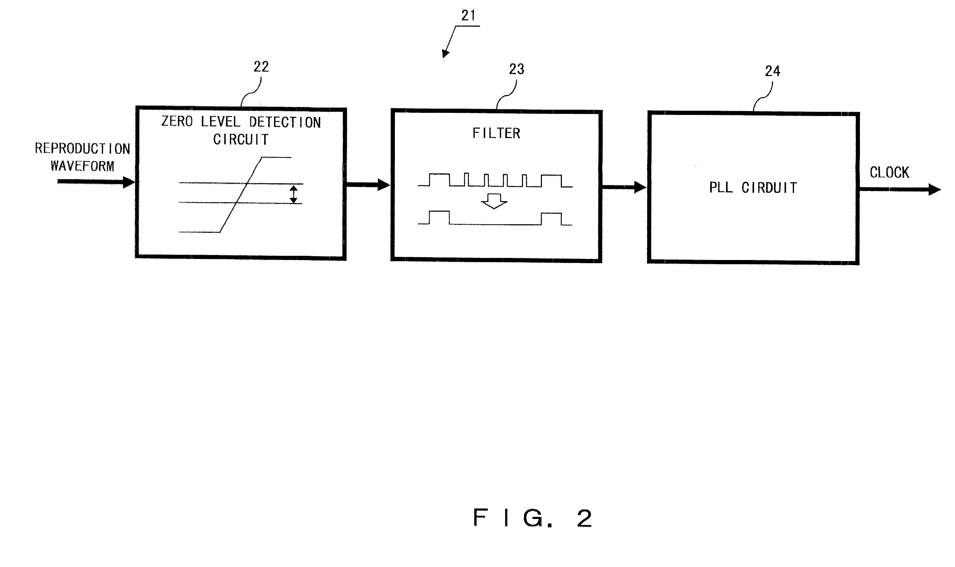

Fig. 2 is a block diagram of a clock extraction circuit 21 according to the first embodiment. The clock extraction circuit 21 comprises a zero level detection circuit 22, a filter 23 and a phase locked loop (PLL) circuit 24. The clock extraction circuit 21 is built-in in a magnetic disk apparatus of which other circuit configurations are the same as those of a common hard disk apparatus.

The magnetic disk apparatus comprises a magnetic head (corresponding to a magnetism detection unit) for writing or reading data. The magnetic head detects a magnetic signal recorded in the patterned medium 11 and converts it into an electric signal.

The zero level detection circuit 22 detects whether or not an amplitude of an output signal of the magnetic head (which is called a reproduction waveform) is within a certain range in the positive and negative directions with "0" at the center, and outputs a high level signal during a period in which an amplitude of the reproduction waveform is equal to or smaller than a positive certain value and also the amplitude is equal to or larger than a negative certain value, and outputs a low level signal in other periods, both as zero level detection signal.

The filter (corresponding to a signal extraction circuit) 23 is a circuit for extracting a signal of which a pulse width is equal to or larger than a certain value from among the zero level detection signals, removing signals of which the pulse widths are smaller than a certain value. The filter 23 can be configured, for example, by an integration circuit, digital circuit or such which measures a pulse width and cuts a signal if the pulse width is smaller than the certain value.

The PLL circuit 24 is a circuit, which is configured by a voltage controlled oscillator, division circuit, phase comparator and such, for generating a clock signal determining a timing of writing and reading data, and performs a phase control for synchronizing an oscillation signal generated by the voltage controlled oscillator with a reference signal.

The zero level detection circuit 22 detects a zero level of a reproduction wavelength output from the magnetic head and outputs a zero level detection signal which becomes a high level in the nonmagnetic part 17, in which a magnetic dot 15 does not exist, and a non-magnetized part of the magnetic part 16 between magnetic dots 15. Therefore, the zero level detection circuit 22 outputs a wide width pulse and a narrow width pulse, as shown in Fig. 2, to the filter 23.

The filter 23 has the function of outputting a pulse, as is, with a pulse width of no narrower than a certain value and cutting a pulse with a pulse width that is narrower than the certain value. This configuration makes it possible to extract only a zero level detection signal corresponding to a position of the nonmagnetic part 17. And the PLL circuit 24 synchronizes a clock signal with a nonmagnetic part detection signal which is output from the filter 23.

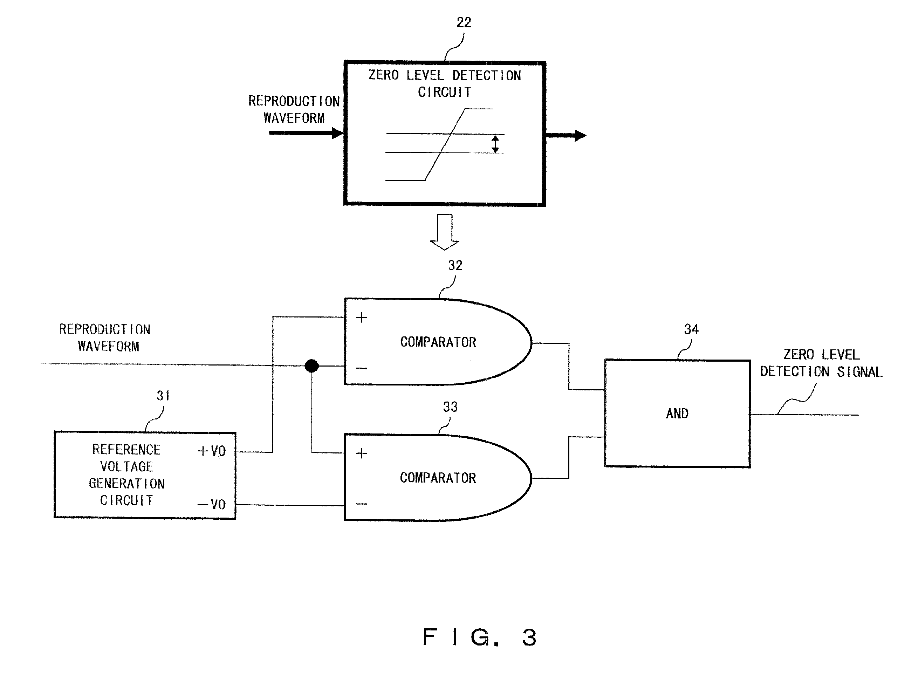

Fig. 3 shows an example of a circuit diagram of a zero level detection circuit 22 which comprises a reference voltage generation circuit 31 for generating a positive and a negative reference voltages of +V0 and -V0, a comparator 32 for comparing a reproduction waveform with the positive reference voltage of +V0, a comparator 33 for comparing the reproduction waveform with the negative reference voltage of -V0, and an AND gate 34 for obtaining a logic product of the outputs of the comparators 32 and 33. The reference voltages, i.e., +V0 and -V0, are ones for determining a detection range of a zero level.

The positive reference voltage of +V0 is input to a non-inversion input terminal of the comparator 32, and a reproduction waveform is input to an inversion input terminal thereof. Therefore, the comparator 32 outputs a low level signal if an amplitude of the reproduction waveform is equal to or larger than the positive reference voltage of +V0, and a high level signal if that of the reproduction waveform is smaller than the positive reference signal of +V0.

A reproduction waveform is input to a non-inversion input terminal of the comparator 33, and the negative reference voltage of -V0 is input to an inversion input terminal thereof. Therefore, the comparator 33 outputs a high level signal if the reproduction waveform is equal to or larger than the negative reference voltage of -V0, and outputs a low level signal if the reproduction waveform is smaller than the negative reference voltage of -V0.

The AND gate 34 outputs a high level signal if an output of the comparator 32 is a high level and also an output of the comparator 33 is high level, and outputs a low level signal if either or both of the outputs of the comparators 32 and 33 are low levels. The AND gate 34 outputs a high level signal if a reproduction waveform is within the range of the negative reference voltage of -V0 and the positive reference voltage of +V0. In other words, the AND gate 34 outputs a high level signal if an absolute value of the reproduction waveform is smaller than a certain value.

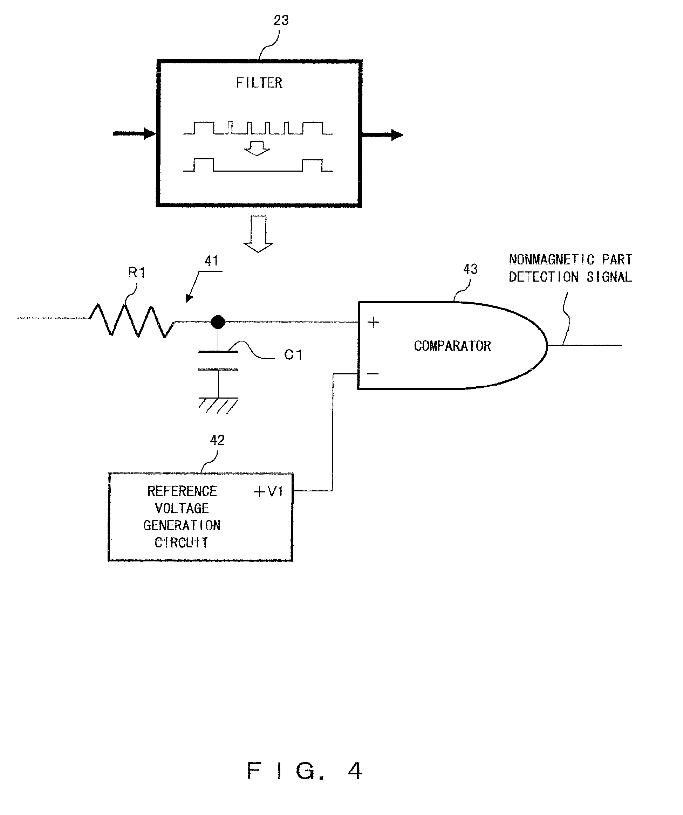

Next, Fig. 4 is a circuit diagram of the filter 23 which comprises an integration circuit 41 comprising a resistor R1 and a capacitor C1, a reference voltage generation circuit 42 for generating a reference voltage of +V1 and a comparator 43.

The integration circuit 41 outputs a signal by integrating a zero-level detection signal that is an output signal of the zero-level detection circuit 22. An output signal of the integration circuit 41 is input to a non-inversion input terminal of the comparator 43 and the reference voltage of +V1 is input to an inversion input terminal thereof. Therefore, the comparator 43 outputs a high level signal if a voltage obtained by integrating the zero level detection signal is equal to or higher than the reference voltage of +V1, and outputs a low level signal if the integrated voltage is lower than the reference voltage of +V1.

An output voltage of the integration circuit 41, that is, a voltage of the capacitor C1 increases along a slope determined by a time constant of the resistor R1 and capacitor C1, and therefore an output of the comparator 43 is low level in the state of the zero level detection signal being a low level, and then an output of the comparator 43 changes to a high level at the time of a voltage of the capacitor C1 becoming no lower than the reference voltage of +V1 following the zero level detection signal changing to a high level.

Therefore, a setup of a time constant of the integration circuit 41 is in such a manner that, in the case of being charged with a narrow width zero level detection signal detected in the magnetic part 16, a charged voltage of the capacitor C1 is lower than the reference voltage of +V1, while in the case of being charged with a wide width zero level detection signal detected in the nonmagnetic part 17, a charged voltage of the capacitor C1 is no lower than the reference voltage of +V1, thereby making it possible to remove the zero level detection signal detected in the magnetic part 16 and extracting only the zero level detection signal detected in the nonmagnetic part 17. A zero level detection signal detected in the nonmagnetic part 17 is called a nonmagnetic part detection signal hereinafter.

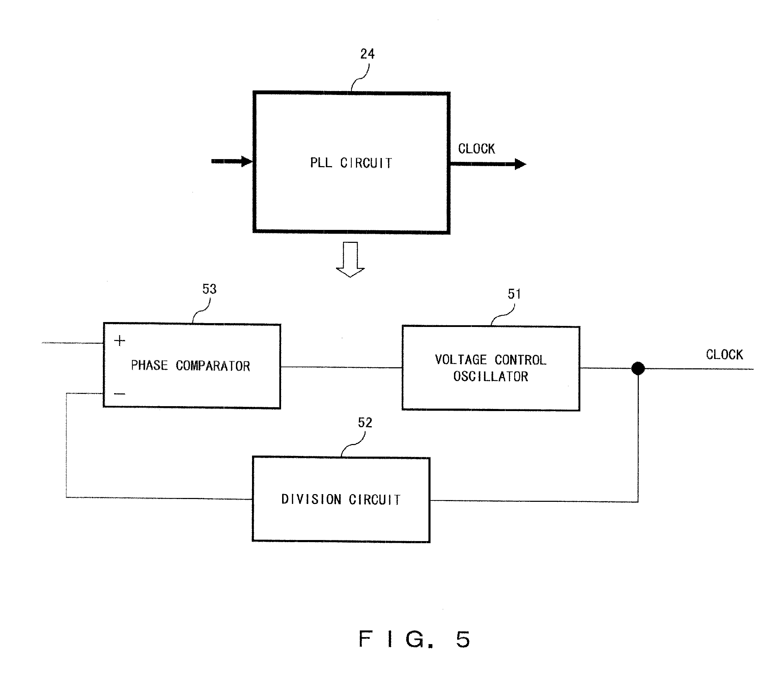

Fig. 5 is a circuit diagram of a common PLL circuit. The PLL circuit 24 comprises a voltage-controlled oscillator 51, a division circuit 52, and a phase comparator 53 for detecting a phase difference of an output signal of the division circuit 52 and that of the filter 23.

The division circuit 52 divides an oscillation signal of the voltage-controlled oscillator 51. The phase comparator 53 detects a phase difference between a signal divided by the division circuit 52 and a nonmagnetic part detection signal , as a reference signal, which is output from the filter 24, and outputs, to the voltage-controlled oscillator 51, a positive or negative control voltage corresponding to an advance or delay of the phase. The voltage-controlled oscillator 51 oscillates and emits a signal having a frequency in response to the control voltage. With a repetition of the above described operation, a clock signal synchronized with the nonmagnetic part detection signal is output from the voltage-controlled oscillator 51. A rise timing of the clock signal matches with a position of the magnetic dot 15 of the magnetic part 16.

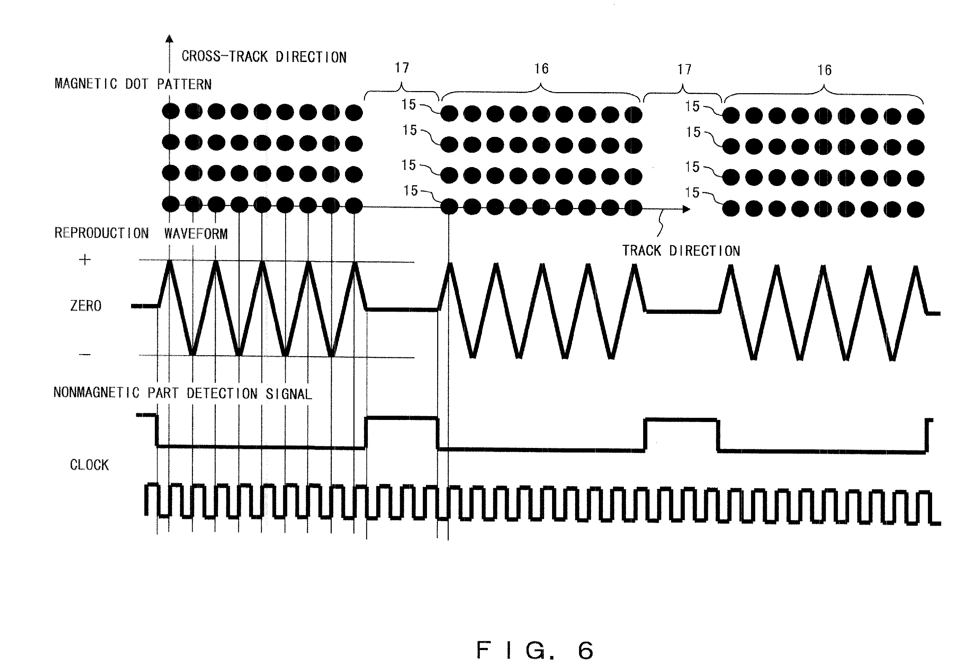

Here, the description is of a clock extraction method according to the first embodiment by referring to Fig. 6 which is a diagram showing a magnetic dot pattern indicating an array of magnetic dots 15 of a patterned medium 11, a reproduction waveform, a nonmagnetic part detection signal and a clock signal.

The horizontal arrow of the magnetic dot pattern shown in Fig. 6 indicates the track direction of the patterned medium 11, and the vertical arrow indicates a cross-track direction.

The reproduction waveform shown in Fig. 6 shows a signal waveform in the case of each magnetic dot 15 of the patterned medium 11 being alternately magnetized to have the positive and negative poles in the initial state. In the reproduction waveform of the magnetic part 16, the amplitude of the reproduction waveform points at a positive peak value at the center position of a certain magnetic dot 15, and the amplitude points at a negative peak at the center position of the magnetic dot 15 adjacent to the aforementioned certain magnetic dot 15. In the nonmagnetic part 17, there is no magnetic dot 15, and therefore the amplitude of the reproduction waveform is approximately zero.

Therefore, a reproduction signal waveform in the case of detecting a magnetic signal by scanning a magnetic head in the direction of a track of the patterned medium 11 becomes an alternate waveform, alternately changing to the positive and negative amplitude in the magnetic part 16, whereas the amplitude becomes zero in the nonmagnetic part 17.

Detecting a zero level of the above described reproduction waveform at the zero level detection circuit 22, the zero level is detected in the range of the amplitude of the reproduction signal in the magnetic part 16 being 0 ± V0 (i.e., reference voltage), and detecting a zero level in a period between the start position and end position of the nonmagnetic part 17. Then the zero level detection signal with a narrow pulse width of the magnetic part 16 is cut at the filter 23, thus extracting only the zero level detection signal of the nonmagnetic part 17. The zero level detection signal of the nonmagnetic part 17 is a nonmagnetic part detection signal. The nonmagnetic part detection signal is a signal changing to a high level at the start position of the nonmagnetic part 17 and to a low level at the end position thereof as shown in Fig. 6. The PLL circuit 24 synchronizes a clock signal with a fall of the nonmagnetic part detection signal.

For example, setting up one cycle of a clock signal equaling a time period from a peak value to the next peak value (i.e., the time period corresponding to the center distance between the adjacent dots 15) of the reproduction waveform, a fall of the clock signal is synchronized with a rise (or fall) of the nonmagnetic part detection signal, thereby making it possible to match a timing of the rise (or fall) of the clock signal with a timing of the peak value of the reproduction waveform. The peak value of the reproduction waveform is the same as the center position of the magnetic dot 15 and therefore the rise timing of the clock signal can be matched with the center position of the magnetic dot 15. Note that, when rotating the patterned medium 11 at a certain rpm (revolutions per minute), the rotation speeds are different between the outer and inner circumferences, and therefore the patterned medium 11 is divided into a plurality of zones in the radial direction and the frequency of a clock signal is changed for each of the zones.

The above described first embodiment is configured to feature the magnetic part 16 arraying magnetic dots 15 at certain intervals and the nonmagnetic part 17 in which a magnetic dot 15 does not exist (i.e., a magnetic signal is not recorded), and synchronize a fall(or rise) of a clock signal with the start position (or end position) of the nonmagnetic part 17 by detecting it. This configuration makes it possible to match a timing of the rise (or fall) of the clock signal with the center position of a magnetic dot 15.

Also configured is to detect a zero level signal of the nonmagnetic part 17, thereby securing no less than a certain value (i.e., one half of an amplitude) of a level difference of a signal from a reproduction waveform constituting a positive or negative peak value of the next magnetic part 16. This makes it possible to accurately detect the start and end positions of the nonmagnetic part 17, and match a timing of the clock signal accurately with the position of a magnetic dot 15.

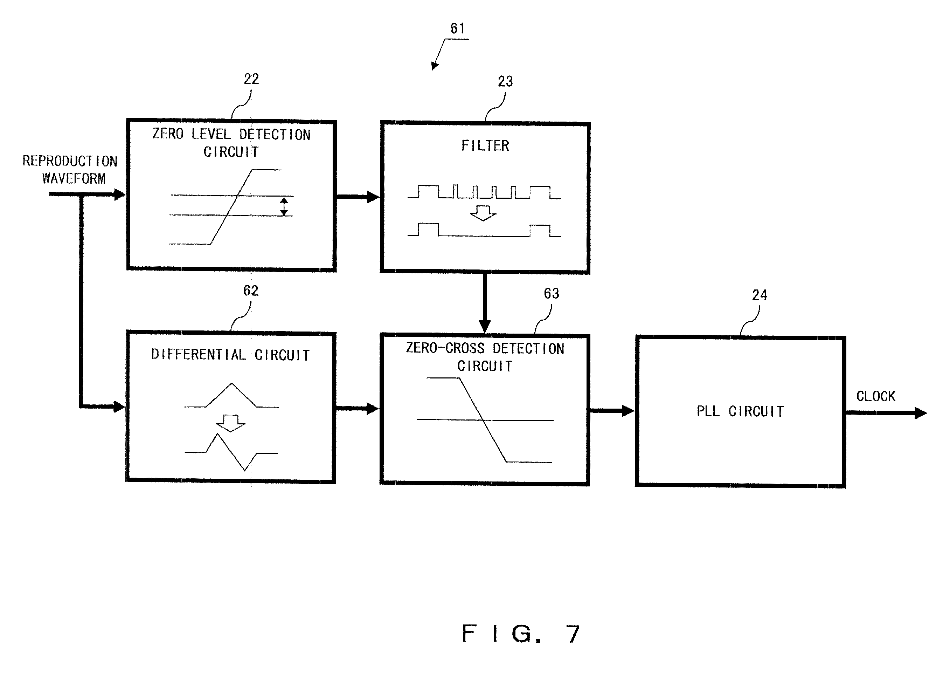

Next, Fig. 7 is a block diagram of a clock extraction circuit 61 according to a second embodiment. The same component signs are assigned to the same blocks as one shown in Fig. 2, and description on them are omitted in the following description.

The clock extraction circuit 61 comprises a zero level detection circuit 22 for detecting a zero level of a reproduction waveform, a filter 23, a differential circuit 62 for differentiating a reproduction waveform, a zero-cross detection circuit 63 for detecting a zero cross of a differential signal and a PLL circuit 24. The differential circuit 62 and zero-cross detection circuit 63 correspond to a slope detection circuit for detecting a slope of a reproduction waveform.

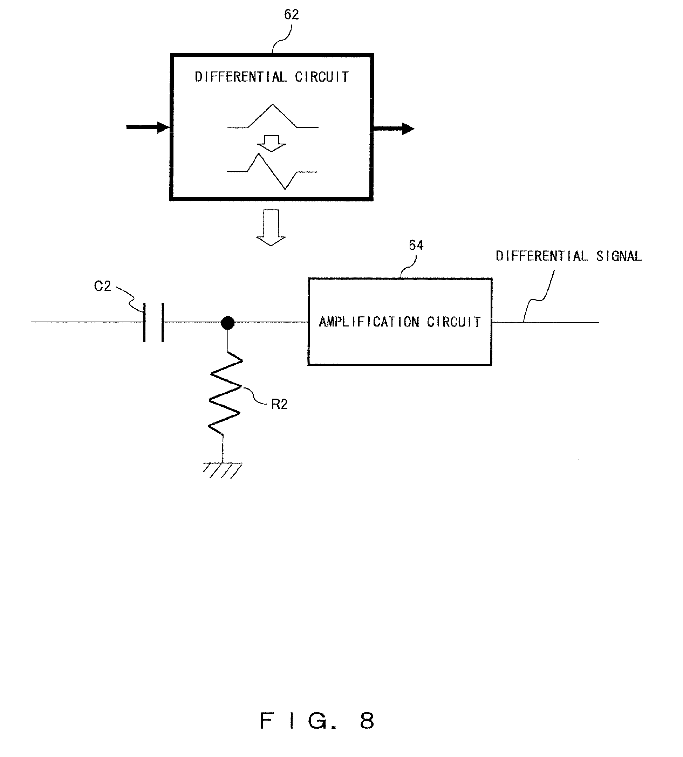

Fig. 8 is a circuit diagram of the differential circuit 62. The differential circuit 62 is constituted by a capacitor C2 to which a reproduction waveform is input, a resistor R2 of which one end is connected to the other end of the capacitor C2 and the other end is grounded, and an amplification circuit 64 of which an input is connected to a connection point of the capacitor C2 and resistor R2.

When a reproduction waveform input to the differential circuit 62 changes from a low level to a high level, a voltage at the connection point of the capacitor C2 and resistor R2 becomes a positive certain voltage level, followed by decreasing along a slope determined by the time constant of the capacitor C2 and resistor R2. Likewise, when the reproduction waveform changes from the high level to a low level, a voltage at the connection point of the capacitor C2 and resistor R2 becomes a negative certain voltage level, followed by the voltage increasing to the ground voltage along a slope determined by the time constant of the capacitor C2 and resistor R2.

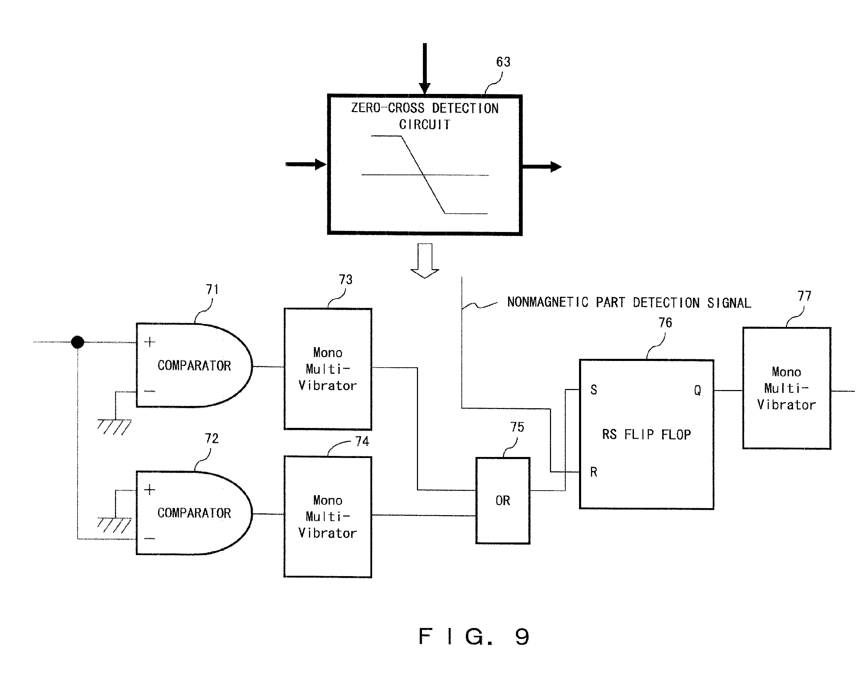

Fig. 9 is a circuit diagram of the zero-cross detection circuit 63. The zero-cross detection circuit 63 is a circuit for detecting a point at which the amplitude of a differential signal indicating a slope of a reproduction waveform points at zero, that is, the slope thereof points at zero.

The zero-cross detection circuit 63 is constituted by comparators 71 and 72 to which the differential signal output from the differential circuit 62 inputs, monostable multi-vibrators 73 and 74, an OR gate 75, an RS flip flop 76 and a monostable multi-vibrator 77.

A differential signal is input to a non-inversion input terminal of the comparator 71 and an inversion input terminal thereof is grounded. Therefore, the comparator 71 outputs a high level signal if the differential signal is equal to or higher than the ground level, and outputs a low level signal if the differential signal is lower than the ground voltage.

The monostable multi-vibrator 73 outputs a pulse of a certain width using a rise of an output signal of the comparator 71, that is, a rise of a positive differential signal as a trigger.

A differential signal is input to an inversion input terminal of the comparator 72 and a non-inversion input terminal thereof is grounded. Therefore, the comparator 72 outputs a low level signal if the differential signal is equal to or higher than the ground level, and outputs a high level signal if the differential signal is lower than the ground level.

The monostable multi-vibrator 74 outputs a pulse with a certain width using a rise of an output signal of the comparator 72, that is, a rise of a negative differential signal of a reproduction waveform as a trigger.

An output of the monostable multi-vibrator 73 and an output of the monostable multi-vibrator 74 are input to the OR gate 75 which then outputs a logic sum of these signals to a set terminal S of the RS flip flop 76.

A nonmagnetic part detection signal is input to a reset terminal R of the RS flip flop 76 which is in a reset state during a period of the nonmagnetic part detection signal being at a high level. A Q-output signal of the RS flip flop 76 is supplied to the monostable multi-vibrator 77 as a trigger signal.

Therefore, the monostable multi-vibrators 73 and 74 outputs a signal of a certain pulse width to the set terminal of the RS flip flop 76 at a timing synchronized with a zero-cross point at which the differential signal of the reproduction waveform changes from the positive to negative, or from the negative to positive. The RS flip flop 76 is in the reset state during the period of the nonmagnetic part detection signal being at a high level, and therefore it shifts to a set state at a timing of an amplitude of the differential signal becoming zero immediately after the nonmagnetic part detection signal has changed from a high level to a low level. That is, an output of the RS flip flop 76 changes to a high level at a timing of the slope of the reproduction waveform changing to zero immediately after the nonmagnetic part 17 is detected. And the monostable multi-vibrator 77 outputs a pulse of a certain width triggered by the high level signal. The pulse of a certain width output from the monostable multi-vibrator 77 is a signal synchronized with the positive or negative peak value of the reproduction waveform, and the signal is called a magnetic dot detection signal hereinafter.

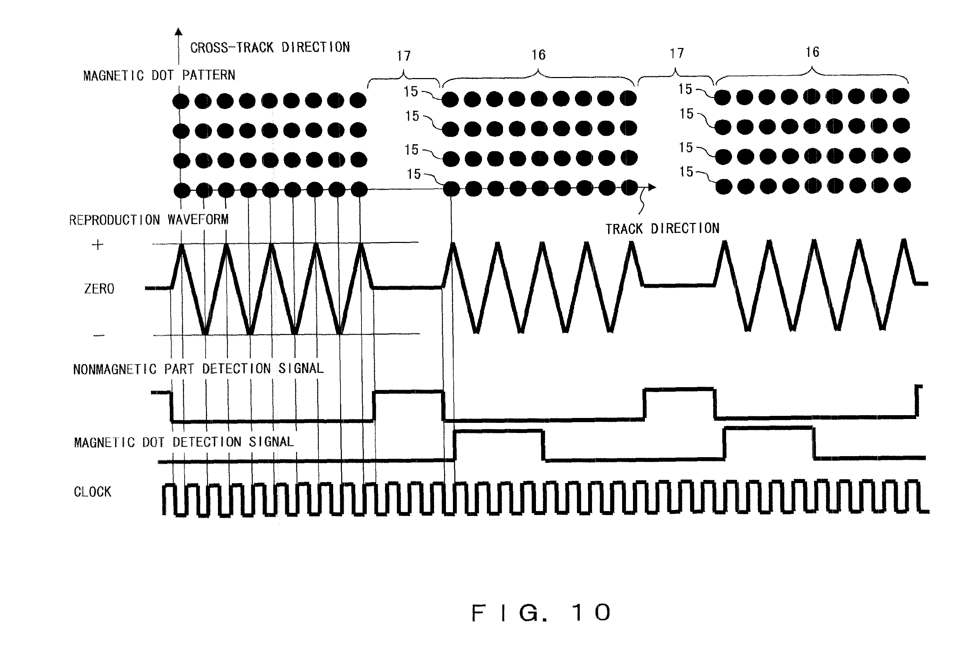

A description at this point is of a clock extraction method according to the second embodiment by referring to Fig. 10 which shows a magnetic dot pattern indicating an array of the magnetic dots 15 of the patterned medium 11, a reproduction waveform, a nonmagnetic part detection signal, a magnetic dot detection signal and a clock signal.

The horizontal arrow of the magnetic dot pattern shown in Fig. 10 indicates the track direction of the patterned medium 11 and the vertical arrow indicates the cross-track direction. In an initial state, the individual magnetic dots 15 are magnetized alternately to have the positive and negative poles in the track direction.

The reproduction waveform shown in Fig. 10 shows a signal waveform in the case of the individual magnetic dots 15 in the magnetic part 16 being magnetized alternately to have the positive and negative poles, and the reproduction waveform is an alternate triangular wave in which the positive and negative peak values are alternately repeated. Since there is no magnetic dot 15 in the nonmagnetic part 17, the amplitude of the reproduction waveform is approximately zero.

As described for the first embodiment, a zero level of a reproduction waveform is detected by the zero-level detection circuit 22, a narrow width pulse detected in a magnetic part 16 is removed by the flter 23, and only a wide width pulse detected in a nonmagnetic part 17 is extracted. The wide width pulse is a nonmagnetic part detection signal becoming a high level at the start position of the nonmagnetic part 17 and a low level at the end thereof.

The zero-cross detection circuit 63 shown in Fig. 9 outputs a magnetic dot detection signal changing to a high level at the timing synchronized with a peak value of a reproduction waveform of the first magnetic dot 15 of a magnetic part 16 immediately following the nonmagnetic part detection signal changing from a high level to a low level. The magnetic dot detection signal is a pulse signal of a certain width because the last stage of the zero-cross detection circuit 63 is equipped with the monostable multi-vibrator 77.

As shown in Fig. 10, a magnetic dot detection signal is a signal changing to a high level at a timing of a reproduction waveform of a magnetic part 16 becoming a peak value immediately after a nonmagnetic part detection, signal changes from a high level to a low level.

Outputting the magnetic dot detection signal to the PLL circuit 24 as a reference signal makes it possible to synchronize a rise of a clock signal generated by the PLL circuit 24 with a rise of the magnetic dot detection signal. The timing of the rise of the magnetic dot detection signal matches with the peak value of the amplitude (i.e., the maximum value of the absolute value of the amplitude) of the reproduction waveform of the magnetic dot 15. Therefore, the rise of the clock signal can be matched with the center position of the magnetic dot 15.

The above described second embodiment is configured to feature magnetic parts 16 arraying the magnetic dots 15 at certain intervals of each track of the patterned medium 11, and the nonmagnetic parts 17, in which a magnetic dot 15 does not exist, and detect a nonmagnetic part 17 and a peak value of a reproduction waveform of the first magnetic dot 15 of the magnetic part 16 subsequent to the detected nonmagnetic part 17, thereby making it possible to synchronize a clock signal with a timing of the reproduction waveform pointing at a peak value. This configuration enables an extraction of a clock signal synchronized with an approximate center position of the magnetic dot 15 of the patterned medium 11. Also, detecting the reproduction waveform of the first magnetic dot 15 of the magnetic part 16 subsequent to the nonmagnetic part 17 makes it possible for a signal to be a detection target, with the amplitude of the signal changing from a zero level at the nonmagnetic part 17 to a positive or negative peak value at the magnetic part 16, thereby enabling more accurate detection of the timing of the reproduction waveform pointing at a peak value. This in turn enables an improvement of accuracy in extracting a clock signal.

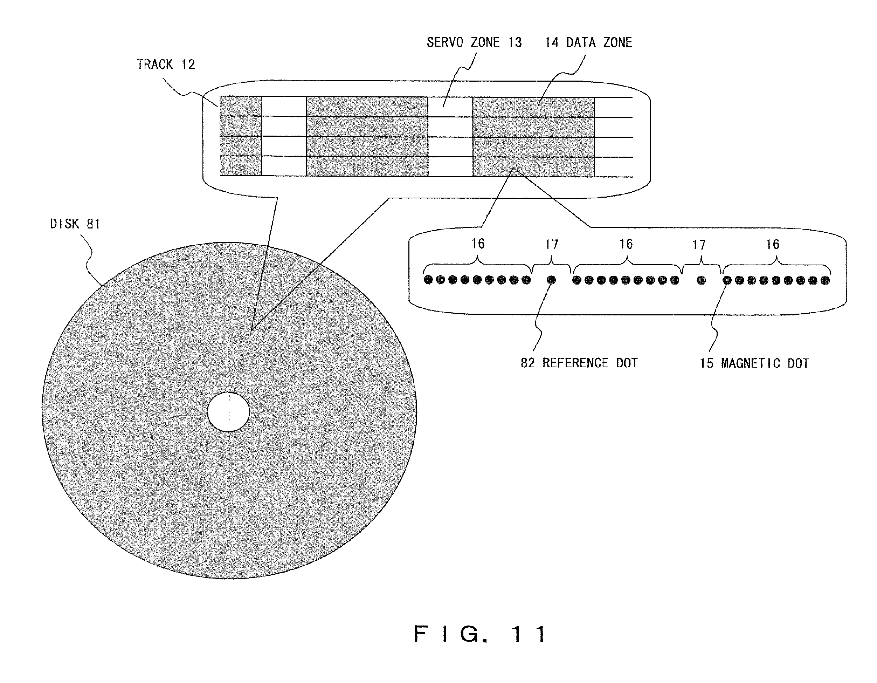

Next, Fig. 11 is a diagram showing a structure of a patterned medium(i.e., a disk)81 according to a third embodiment.

The patterned medium 81 according to the third embodiment is featured with a reference dot 82 at the center of a nonmagnetic part 17, as shown in Fig. 11.

A data zone 14 of the patterned medium 81 is featured with a magnetic part 16 arraying magnetic dots 15 at certain intervals as in the case of the patterned medium 11 of Fig. 1, and a nonmagnetic part 17 having a reference dot 82 at the center and not arraying a magnetic dot 15 in other parts. The difference between the patterned medium 81 shown in Fig. 11 and the patterned medium 11 shown in Fig. 1 is whether or not the reference dot 82 is featured at the center of the nonmagnetic part 17.

A clock extraction circuit of a magnetic disk apparatus according to the third embodiment comprises, likewise Fig. 7, a zero level detection circuit 22 for detecting a zero level of a reproduction waveform, a filter 23, a differential circuit 62 for differentiating a reproduction waveform, a zero-cross detection circuit 63 and a PLL circuit 24.

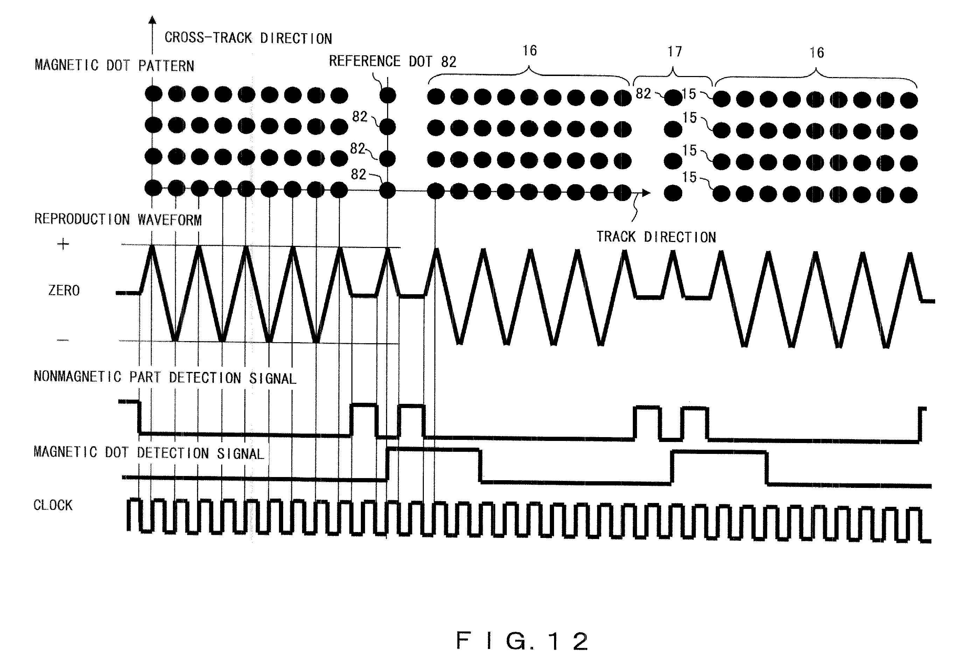

At this point, a description is on the clock extraction method according to the third embodiment by referring to Fig. 12 which shows a magnetic dot pattern indicating an array of the magnetic dots 15 and reference dot 82 of the patterned medium 81, a reproduction waveform, a nonmagnetic part detection signal, a reference dot detection signal, and a clock signal.

The horizontal arrow of the magnetic dot pattern indicates a track direction of the patterned medium 81 and the vertical arrow indicates a cross-track direction, in Fig. 12. In an initial state, the individual magnetic dots 15 are alternately magnetized to have the positive and negative poles in the track direction.

A reproduction waveform of the magnetic part 16 is an alternate triangular wave pointing at the positive peak value or negative peak value at the center of a magnetic dot 15 as shown in Fig. 12.

A reproduction waveform of the nonmagnetic part 17 is one indicating the amplitude of nearly zero in the section having no magnetic dot 15 and the amplitude of a peak value at the center of the reference dot 82 at the center of the nonmagnetic part 17.

The zero level detection circuit 22 detects a section of a megnetic signal becoming zero between adjacent magnetic dots 15 of the magnetic part 16 and a section having no magnetic dot other than the reference dot 82 of the nonmagnetic part 17, and outputs a narrow width pulse corresponding to a section of the zero level of the magnetic part 16 and a wide width pulse corresponding to a section of the zero level of the nonmagnetic part 17 as a zero level detection signal to the filter 23.

The filter 23 removes the narrow width pulse and outputs, as a nonmagnetic part detection signal, a pulse of which the pulse width is equal to or larger than a certain value, detected in the nonmagnetic part 17.

The third embodiment is configured to feature one dot of reference dot 82 at the center of a nonmagnetic part 17 and magnetize the reference dot 82 as the positive pole, and therefore a nonmagnetic part detection signal output from the filter 23 is a high level in a section of the nonmagnetic part 17 in which a magnetic dot 15 does not exist, it changes to a low level at a position of the reference dot 82 existing, and it becomes a high level in a section subsequent to the aforementioned section in which a magnetic dot 15 does not exist, as shown in Fig. 12. Then it changes to the low level at the end position of the nonmagnetic part 17.

In this case, a reference dot detection signal output from the zero-cross detection circuit 63 (refer to Fig. 9) is a pulse signal of a certain width changing from a low level to a high level at a timing at which the slope of a reproduction waveform of the reference dot of the nonmagnetic part 17 becomes zero after a nonmagnetic part detection signal changes from a high level to a low level. The reference dot detection signal is output at a timing between two pulses of the nonmagnetic part detection signal.

Supplying the PLL circuit 24 with the reference dot detection signal as a reference signal makes it possible to synchronize a rise timing of a clock signal generated by the PLL circuit 24 with a rise of the reference dot detection signal.

By setting the distance from the center of the reference dot 82 of the nonmagnetic part 17 to that of the magnetic dots 15 of the magnetic part 16 an integer times of the distance between the centers of adjacent magnetic dots 15, for example, synchronizing a rise of a clock signal with a rise of the reference dot detection signal makes it possible to match the timing of the clock signal with the center position of the magnetic dot 15 of the magnetic part 16.

As described above, the third embodiment is configured to feature the magnetic part 16 arraying the magnetic dots 15 at certain intervals and the nonmagnetic part 17 not recording a magnetic signal in each track of the patterned medium 81, feature the nonmagnetic part 17 with at least one reference dot 82 recording a magnetic signal, and synchronize a clock signal with a timing of a peak value of a reproduction waveform of the reference dot 82 of the nonmagnetic part 17 being detected. This configuration makes it possible to synchronize a rise of the clock signal with the center position of each magnetic dot 15 of the magnetic part 16 of the patterned medium 81. Therefore, writing and reading data at the timing synchronized with the clock signal enable the data writing and reading at the center of the magnetic dot 15 of the patterned medium 81.

The above described embodiments enable an accurate matching of a timing of a clock signal with a magnetic dot of the patterned medium.

The present invention is not limited to the above described embodiments, and rather may be configured, for example, as follows:
(1) The embodiments are configured to lay out the magnetic part 16 and nonmagnetic part 17 alternately at the same intervals; such a layout is optional, however.
(2) The third embodiment is configured to place one reference dot 83 in the nonmagnetic part 17; two or more reference dots 82 may be placed therein, however.
(3) A circuit for detecting the nonmagnetic part 17 may use a digital circuit for processing a reproduction waveform by converting it from analog to digital (A/D), in lieu of being limited to using the analog circuits, such as the zero level detection circuit 22, filter 23 and zero-cross detection circuit 63, as described for the preferred embodiments.
(4) The nonmagnetic part 17 may be configured by featuring magnetic dots 15 at certain intervals in the entirety of a track and leaving a partial zone of the nonmagnetic part 17 without recording a magnetic signal, in lieu of only a configuration of not featuring a magnetic dot.

## Claims

1. A clock extraction method for extracting a clock signal determining a timing of writing or reading data to or from a patterned medium, comprising:
detecting by using a magnetism detection unit a magnetic part(17) arraying magnetic dots(15) at certain intervals for recording a magnetic signal, and a magnetic signal recorded in the patterned medium comprising a nonmagnetic part(17) not recording a magnetic signal; and
identifying a section in which an absolute value of an amplitude of the magnetic signal detected by the magnetism detection unit continuously indicates less than a certain value as the nonmagnetic part (17), and synchronizing the clock signal with a timing of a start or end of the identified nonmagnetic part(17) or a detection timing of the magnetic signal of the magnetic dot of the magnetic part(16) subsequent to the nonmagnetic part (17).

2. The clock extraction method for the patterned medium according to claim 1,
detecting a timing at which an amplitude of said magnetic signal detected from said magnetic dot of said magnetic part subsequent to said nonmagnetic part (17) becomes a peak value, and synchronizing said clock signal with the timing at which the amplitude becomes the peak value.

3. The clock extraction method for the patterned medium according to claim 1,
detecting a timing at which a slope of said magnetic signal detected from said magnetic dot(15) of said magnetic part(16) subsequent to said nonmagnetic part(17) becomes zero, and synchronizing said clock signal with the timing at which the slope of the magnetic signal 1 becomes zero.

4. The clock extraction method for the patterned medium according to claim 1,
differentiating by using a differential circuit said magnetic signal detected from said magnetic dot(15) of said magnetic part(16) subsequent to said nonmagnetic part (17), detecting by using a zero-cross circuit a timing at which a value of a differential signal of an output of the differential circuit becomes zero, and synchronizing said clock signal with the timing at which the value of the differential signal becomes zero.

5. A clock extraction method for extracting a clock signal determining a timing of writing or reading data to or from a patterned medium, comprising:
detecting by using a magnetism detection unit a magnetic signal recorded in a patterned medium comprising a magnetic part(16) arraying magnetic dots(15) at certain intervals for recording a magnetic signal, a zone not recording a magnetic signal and a nonmagnetic part (17) having at least one reference dot(82) recording the magnetic signal; and
detecting by using the magnetism detection unit the magnetic signal of the reference dot(82) in the nonmagnetic part(17), and synchronizing the clock signal with a timing of the magnetic signal of the reference dot (82) being detected.

6. The clock extraction method for a patterned medium according to claim 5,
differentiating by using a differential circuit said magnetic signal detected from said reference dot (82) of said nonmagnetic part (17), detecting by using a zero cross circuit a timing at which a value of a differential signal of an output of the differential circuit becomes zero, and synchronizing said clock signal with the timing at which the value of the differential signal becomes zero.

7. A patterned medium, featured with a magnetic part(16) arraying magnetic dots (15) at certain intervals for recording a magnetic signal, and a nonmagnetic part (17) not recording the magnetic signal, both in a track.

8. The patterned medium according to claim 7, wherein
said nonmagnetic part(17) is featured with a reference dot(82) for recording said magnetic signal in order to synchronize said clock signal therewith.

9. The patterned medium according to claim 7 or 8,
forming said magnetic part (16) and nonmagnetic part (17) alternately in a single track.

10. A magnetic disk apparatus, comprising:
a clock signal generation circuit(24) for generating a clock signal determining a timing of writing or reading data to or from a patterned medium;
a magnetism detection unit for detecting a magnetic signal recorded in a patterned medium comprising a magnetic part arraying magnetic dots at certain intervals for recording a magnetic signal, and a nonmagnetic part not recording a magnetic signal;
a zero level detection circuit (22) for detecting a zero level at which an absolute value of an amplitude of the magnetic signal detected by the magnetism detection unit becomes less than a certain value; and
a signal extraction circuit(23) for extracting a signal of which a pulse width is equal to or more than a certain value as a nonmagnetic part detection signal which indicates a position of the nonmagnetic part from among a plurality of zero level detection signals detected by the zero level detection circuit, wherein
the clock signal generation circuit(24) synchronize the clock signal with the nonmagnetic part detect signal.

11. The magnetic disk apparatus according to claim 10,
featuring said nonmagnetic part with at least one reference dot recording said magnetic signal, and
comprising a slope detection circuit for detecting a timing at which a slope of the magnetic signal of the reference dot becomes zero, wherein
said clock signal generation circuit(24) synchronizes said clock signal with the timing at which the slope of the magnetic signal of the reference dot becomes zero.

12. The magnetic disk apparatus according to claim 10, comprising:
a slope detection circuit for detecting a timing at which a slope of said magnetic signal detected in the magnetic part becomes zero after said nonmagnetic part detection signal is detected, wherein
said clock signal generation circuit(24) synchronizes said clock signal with the timing at which the slope of the magnetic signal detected by the slope detection circuit becomes zero.

13. The magnetic disk apparatus according to claim 12, wherein:
said slope detection circuit comprises a differential circuit(62) for differentiating said magnetic signal and a zero-cross detection circuit(63) for detecting a timing at which a value of a differential signal that is an output of the differential circuit becomes zero, wherein
said clock signal generation circuit(24) synchronizes said clock signal with the timing at which the value of the differential signal becomes zero.

14. A magnetic disk apparatus, comprising:
a clock signal generation circuit(24) for generating a clock signal determining a timing of writing or reading data to or from a patterned medium;
a magnetism detection unit for detecting a magnetic signal recorded in a patterned medium comprising a magnetic part arraying magnetic dots at certain intervals for recording a magnetic signal, and a nonmagnetic part not recording a magnetic signal;
a zero level detection circuit(22) for detecting a zero level at which an absolute value of an amplitude of the magnetic signal detected by the magnetism detection unit becomes less than a certain value;
a signal extraction circuit(23) for extracting a signal of which a pulse width is equal to or more than a certain value as a nonmagnetic part detection signal which indicates a position of the nonmagnetic part from among a plurality of zero level detection signals detected by the zero level detection circuit; and
a slope detection circuit for detecting a timing at which a slope of the magnetic signal detected in the magnetic part becomes zero after the nonmagnetic part detection signal is detected, wherein
the clock signal generation circuit (24) synchronizes the clock signal with the timing at which the slope of the magnetic signal of the magnetic part becomes zero.

15. The magnetic disk apparatus according to claim 14, wherein:
said slope detection circuit comprises a differential circuit (62) for differentiating said magnetic signal and a zero-cross detection circuit (63) for detecting a timing at which a value of a differential signal that is an output of the differential circuit becomes zero, wherein
said clock signal generation circuit (24) synchronizes said clock signal with the timing at which the value of the differential signal becomes zero.

16. A clock extraction circuit for a patterned medium, comprising:
a magnetism detection unit for detecting a magnetic signal recorded in a patterned medium comprising a magnetic part arraying magnetic dots at certain intervals for recording a magnetic signal, and a nonmagnetic part not recording a magnetic signal;
a zero level detection circuit(22) for detecting a zero level at which an absolute value of an amplitude of the magnetic signal detected by the magnetism detection unit becomes less than a certain value;
a signal extraction circuit (23) for extracting a signal of which a pulse width is equal to or more than a certain value as a nonmagnetic part detection signal which indicates a position of the nonmagnetic part from among a plurality of zero level detection signals detected by the zero level detection circuit(22); and
a clock signal generation circuit (24) for synchronizing said clock signal with a timing of the nonmagnetic part detection signal or the magnetic signal of the magnetic dot in the magnetic part subsequent to the nonmagnetic part being detected.

17. The clock extraction circuit for a patterned medium according to claim 16,
featuring said nonmagnetic part with at least one reference dot recording said magnetic signal, and
comprising a slope detection circuit for detecting a timing at which a slope of the magnetic signal of the reference dot becomes zero, wherein
said clock signal generation circuit(24) synchronizes said clock signal with the timing at which the slope of the magnetic signal of the reference dot becomes zero.

18. The clock extraction circuit for a patterned medium according to claim 16, comprising
a slope detection circuit for detecting a timing at which a slope of said magnetic signal detected in the magnetic part becomes zero after said nonmagnetic part detection signal is detected, wherein
said clock signal generation circuit(24) synchronizes said clock signal with the timing at which the slope of the magnetic signal detected by the slope detection circuit becomes zero.
